# EUROPEAN PATENT SPECIFICATION

(11) **EP 2 211 593 B1**
(45) Date of publication and mention of the grant of the patent: **03.08.2016**
(21) Application number: 10000709.5
(22) Date of filing: 25.01.2010
(51) Int. Cl.: H05B 41/04, H05B 41/38

(54) **Discharge lamp lighting device and illumination fixture**
Entladungslampenbeleuchtungsvorrichtung und Beleuchtungsbefestigung
Dispositif d'éclairage par lampe à décharge et accessoire d'illumination

(30) Priority: 27.01.2009 JP 2009015969
(43) Date of publication of application: 28.07.2010
(73) Proprietor: Panasonic Intellectual Property Management Co., Ltd., Osaka 540-6207 (JP)
(72) Inventor: Komatu, Naoki, Hyougo (JP)
(74) Representative: Rüger, Barthelt & Abel

(56) References cited:
- JP-A- H 076 889
- JP-A- 2007 005 260
- US-A1- 2008 180 037

## Description

### [Field of the Invention]

The present invention relates to a discharge lamp lighting device and an illumination fixture.

### [Background Art]

As a discharge lamp lighting device for lighting a discharge lamp of a thermionic cathode type such as a high pressure discharge lamp which is also called HID (high-intensity discharge lamp), there has been provided a conventional discharge lamp lighting device including a power conversion part for outputting AC power by receiving DC power and a control part for controlling the power conversion part.

A discharge lamp lighting device of this type further includes a control part which performs, in starting a discharge lamp, after a starting operation to start the discharge lamp by making a voltage outputted from a power conversion part relatively high and before starting a normal operation to cause a power conversion part to output AC power to the discharge lamp for lighting maintenance in the discharge lamp, an electrode heating operation to make a frequency of power outputted from the power conversion part relatively high for heating each electrode of the discharge lamp (e.g. refer to Japanese translation of PCT application No. 2005-507553).

According to the above discharge lamp lighting device, discharge is stabilized after transition to a normal operation in comparison with a case without performing the electrode heating operation, and it is suppressed to let the lighting go out.

JP 2007 005260 A discloses a detection circuit that detects a current flowing between both electrodes of the discharge lamp in a predetermined period until the discharge lamp is switched to a normal operation after lighting of the discharge lamp DL is started. A determination circuit determines whether full-wave discharge or half-wave discharge is present based on the output of the detection circuit. A control circuit has a switching part for switching a current carried between both the electrodes. A constant current is supplied to the discharge lamp when the determination circuit determines that full-wave discharge is present, and a current having a peak value larger than the constant current is supplied to the discharge lamp when the determination circuit determines that it is half-wave discharge is present.

JP H07 6889 A shows a discharge lamp lighting device with a chopper circuit to convert AC electric power supply into DC electric power. An inverter circuit is provided to convert DC electric power into high frequency electric power and a load circuit containing a discharge lamp is connected to an output end of the inverter circuit. The inverter circuit is operated first and the chopper circuit is operated subsequently. A means is provided to impress intermittently pulse-like voltage sufficient to start this discharge lamp. The pulse-like voltage may be asymmetric between the positive and the negative polarity.

### [Disclosure of the Invention]

### [Problems to be solved by the Invention]

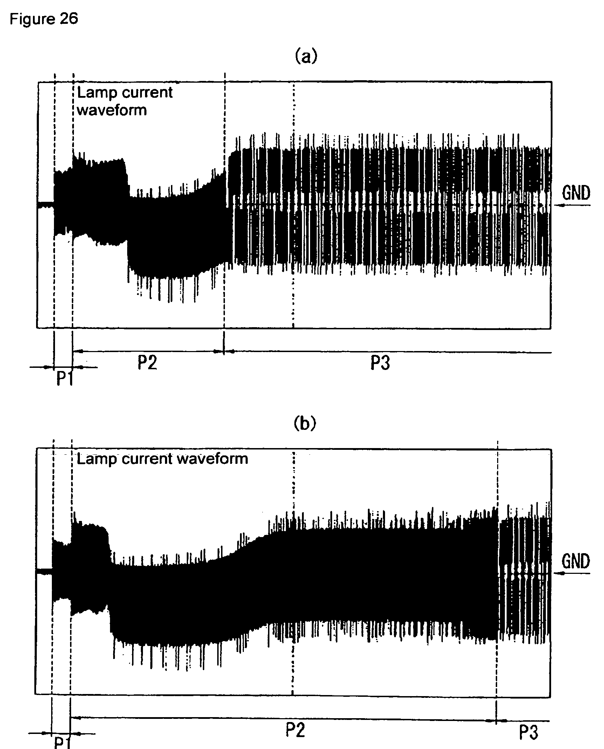

Here, as shown in Fig. 26 (a), if an electrode heating period P2 for performing an electrode heating operation after a starting period P1 for performing a starting operation is short, an electrode of a discharge lamp is not heated sufficiently before the start of a normal period P3 for performing a normal operation, wherein a current outputted to a discharge lamp (referred to as a "lamp current" hereinafter) is made uneven between polarities thereof. Transition to the normal operation thus realized without sufficiently heating the electrode of the discharge lamp will result in unstable discharge after transition to the normal operation and the lighting may possibly go out. Accordingly, it is necessary to make the electrode heating period P2 sufficiently long as shown in Fig. 26 (b), but a required length of the polarity heating period P2 (i.e. a duration time of electrode heating operation) varies in each discharge lamp.

Accordingly, if duration time of an electrode heating operation is determined by referring to a discharge lamp which requires a longest period of time to perform an electrode heating operation out of discharge lamps assumed to be connected, the duration time is excessive to the other discharge lamps. Since the electrode heating operation causes a power conversion part to output power which is larger than that in the normal operation, the duration time of the electrode heating operation needs to be as short as possible in order to suppress an adverse effect to the life of discharge lamps.

The present invention has been achieved by taking the above causes into consideration, having an object to provide a discharge lamp lighting device and an illumination fixture wherein startability is ensured while preventing unstable lighting due to an asymmetrical current.

### [Means adapted to solve the Problems]

According to a first aspect of the present invention, a discharge lamp lighting device includes a power conversion part for outputting AC power by receiving DC power, a starting part connected, with a discharge lamp, between output ends of the power conversion part for generating a high voltage to start the discharge lamp, and a control part for controlling the power conversion part, wherein the control part performs, in starting the discharge lamp, after a starting operation to start the discharge lamp by a high voltage generated in the starting part and before starting a normal operation to cause the power conversion part to output AC power to the discharge lamp for lighting maintenance in the discharge lamp, an electrode heating operation for making a frequency outputted from the power conversion part higher than that during the normal operation over a predetermined period of time for heating each electrode of the discharge lamp, includes a symmetry determination part for determining whether or not an output current outputted from the power conversion part to the discharge lamp is positive/negative symmetrical, and the control part causing, in finishing the electrode heating operation, transition to the normal operation if the output current is determined to be positive/negative symmetrical by the symmetry determination part and, if the output current is determined to be positive/negative asymmetrical by the symmetry determination part, the electrode heating operation again after a restarting operation which is realized by adding a change to reduce a difference in an output current between polarities to the starting operation.

According to this aspect, transition to the normal operation is not carried out if the output current is determined to be positive/negative asymmetrical, whereby unstable lighting caused by an asymmetrical current can be avoided. Determination of the output current as being positive/negative asymmetrical is also accompanied by the restarting operation to reduce a difference in the output current between the polarities, whereby startability is improved in comparison with cases to stop operating and/or simply return to the starting operation when the output current is determined to be positive/negative asymmetrical.

According to a second aspect of the invention, in the first aspect of the invention, wherein the power conversion part includes a step-down chopper circuit for stepping down inputted DC power and a full bridge circuit for converting DC power outputted from the step-down chopper circuit.

According to a third aspect of the invention, in the first aspect of the invention, wherein the power conversion part includes a full bridge circuit and the control part controls power outputted from the power conversion part by a duty ratio obtained in turning on/off a switching element which constitutes a full bridge circuit.

According to a fourth aspect of the invention, in the first aspect of the invention, wherein the power conversion part includes a half bridge circuit and the control part controls power outputted from the power conversion part by a duty ratio obtained in turning on/off a switching element which constitutes a half bridge circuit.

According to a fifth aspect of the invention, in any of the first to fourth aspects of the invention, wherein the starting operation includes high voltage pulses of both polarities for starting to be outputted to the discharge lamp and the restarting operation includes a high voltage pulse for starting to be outputted to the discharge lamp only in a polarity having a less current outputted from the power conversion part.

According to a sixth aspect of the present invention, in any of the first to fourth aspects of the invention, wherein the starting operation includes high voltage pulses of both polarities for starting to be outputted to the discharge lamp and the restarting operation makes the number of high voltage pulses for starting larger in one of polarities having a less current outputted from the power conversion part than the other polarity.

According to a seventh aspect of the invention, in any of the first to sixth aspects of the invention, wherein the restarting operation makes an amplitude of the voltage outputted from the power conversion part larger than that in the starting operation in a polarity having a less current outputted from the power conversion part.

According to an eighth aspect of the invention, in any of the first to fourth aspects of the invention, wherein the restarting operation makes a duration time of an output longer than that in the starting operation in a polarity having a less current outputted from the power conversion part.

According to a ninth aspect of the invention, in any of the first to eighth aspects of the invention, wherein the control part causes, before starting the restarting operation, a stopping operation to stop AC power outputted from the power conversion part over a predetermined stopping period of time.

According to this aspect, gas is stabilized in the discharge lamp during the stopping operation, whereby making it easier to resolve an asymmetrical state of the output current in comparison with a case without performing the stopping operation.

According to a tenth aspect of the invention, in any of the first to ninth aspects of the invention, wherein the control part calculates the number of times to determine the output current as being asymmetrical by the symmetry determination part in finishing the electrode heating operation and stops AC power outputted from the power conversion part when the number of times reaches a predetermined upper limit number of times.

According to this aspect, it is possible to prevent an unnecessary electrical stress from being applied to circuit components by endlessly repeating the restarting operation and the electrode heating operation.

According to an eleventh aspect of the invention, an illumination fixture includes the discharge lamp lighting device according to any one of the first to tenth aspects and a fixture main body for holding the discharge lamp lighting device.

### [Effect of the Invention]

According to the first aspect of the invention, the control part causes, in finishing the electrode heating operation, transition to the normal operation if the output current is determined to be positive/negative symmetrical by the symmetry determination part, whereas, if the output current is determined to be positive/negative asymmetrical by the symmetry determination part, the electrode heating operation is carried out again after the restarting operation which is realized by adding a change to reduce a difference in the output current between polarities to the starting operation, and transition to the normal mode is not allowed if the output current is determined to be positive/negative asymmetrical, whereby unstable lighting caused by an asymmetrical current can be avoided. Moreover, determination of the output current as being positive/negative asymmetrical triggers the restarting operation to reduce a difference in the output current between polarities, whereby startability is improved in comparison with cases to stop operating and/or simply return to the starting operation when the output current is determined to be positive/negative asymmetrical.

According to the ninth aspect of the invention, the control part causes, before starting the restarting operation, the stopping operation to stop AC power outputted from the power conversion part over the predetermined period of time for stabilization of gas in the discharge lamp during the stopping operation, whereby making it easier to resolve an asymmetrical state of the output current in comparison with a case without performing the stopping operation.

According to the tenth aspect of the invention, the control part calculates the number of times to determine the output current as being asymmetrical by the symmetry determination part in finishing the electrode heating operation and stops AC power outputted from the power conversion part when the number of times reaches an upper limit number of times, whereby making it possible to prevent an unnecessary electrical stress from being applied to circuit components by endlessly repeating the restarting operation and the electrode heating operation.

### [Brief Description of the Drawings]

[Fig.1] Fig. 1 is an explanatory diagram showing an operation according to an embodiment of the present invention.
[Fig.2] Fig 2 is a circuit block diagram showing the embodiment of the present invention.
[Fig.3] Fig. 3 is a circuit diagram showing a symmetry determination part according to the embodiment of the present invention.
[Fig.4] Fig. 4 is an explanatory diagram showing one example of an operation in the symmetry determination part according to the embodiment of the present invention, including Fig. 4 (a) showing a case with a symmetrical lamp current and Fig. 4 (b) showing a case with an asymmetrical lamp current.
[Fig.5] Fig. 5 is an explanatory diagram showing one example of a driving signal inputted from a control part to each switching element according to the embodiment of the present invention.
[Fig.6] Fig. 6 is an explanatory diagram showing one example of an operation according to the embodiment of the present invention.
[Fig.7] Fig. 7 is a flowchart showing one example of the operation according to the embodiment of the present invention.
[Fig.8] Fig. 8 is a flowchart showing a modified example of the operation according to the embodiment of the present invention.
[Fig.9] Fig. 9 is a flowchart showing another modified example of the operation according to the embodiment of the present invention.
[Fig.10] Fig. 10 is a circuit block diagram showing a modified example according to the embodiment of the present invention.
[Fig.11] Fig. 11 is an explanatory diagram showing one example of a driving signal inputted from the control part to each switching element in the modified example of Fig. 10.
[Fig.12] Fig. 12 is a circuit block diagram showing another modified example according to the embodiment of the present invention.
[Fig.13] Fig. 13 is an explanatory diagram showing one example of a driving signal inputted from the control part to each switching element in the modified example of Fig. 12.
[Fig.14] Fig. 14 is an explanatory diagram showing an operation in further another modified example according to the embodiment of the present invention when no asymmetrical current occurs.
[Fig.15] Fig. 15 is an explanatory diagram showing one example of a driving signal inputted from the control part to each switching element in the modified example of Fig. 14.
[Fig.16] Fig. 16 is a circuit block diagram showing one circuit example in the modified example of Fig. 14.
[Fig.17] Fig. 17 is an explanatory diagram showing one example of an operation in the modified example of Fig. 14 when an asymmetrical current occurs.
[Fig.18] Fig. 18 is an explanatory diagram showing another example of the operation in the modified example of Fig. 14 when the asymmetrical current occurs.
[Fig.19] Fig. 19 is an explanatory diagram showing further another example of the operation in the modified example of Fig. 14 when the asymmetrical current occurs.
[Fig.20] Fig. 20 is an explanatory diagram showing a further example of the operation in the modified example of Fig. 14 when the asymmetrical current occurs.
[Fig.21] Fig. 21 is a circuit diagram showing a modified example of the symmetry determination part according to the embodiment of the present invention.
[Fig.22] Fig. 22 is an explanatory diagram showing one example of a relationship between the amplitude of a lamp voltage in a restarting operation and an asymmetrical voltage in a polarity having a less lamp current in the modified example according to the embodiment of the present invention.
[Fig.23] Fig. 23 is a perspective view showing one example of an illumination fixture using the embodiment of the present invention.
[Fig.24] Fig. 24 is a perspective view showing another example of the illumination fixture using the embodiment of the present invention.
[Fig.25] Fig. 25 is a perspective view showing further another example of the illumination fixture using the embodiment of the present invention.
[Fig.26] Figs. 26 (a) and 26 (b) are explanatory diagrams showing a waveform example of a lamp current with Fig. 26 (a) corresponding to a case of having an insufficient duration time of an electrode heating operation and Fig. 26 (b) corresponding to a case of having a sufficiently long duration time of the electrode heating operation.

### [Best Mode for Carrying Out the Invention]

Best mode for carrying out the present invention will be explained below with reference to drawings.

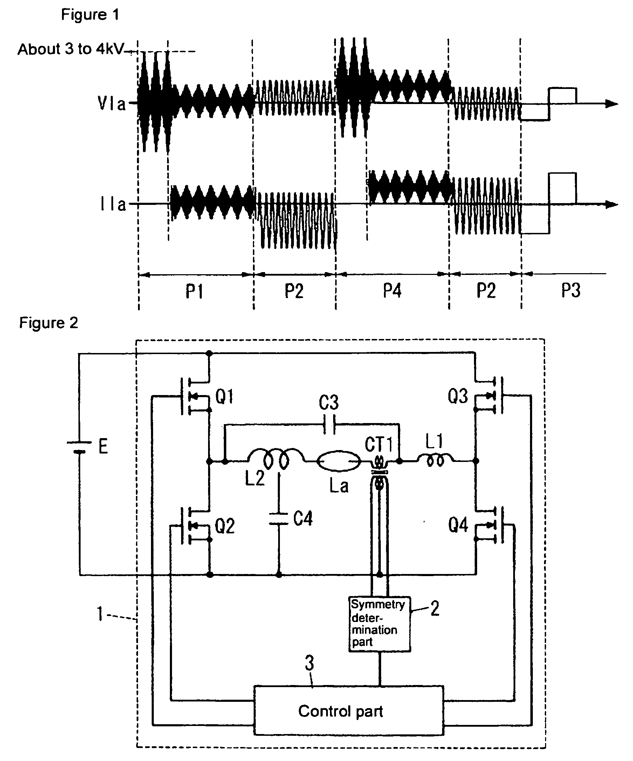

A discharge lamp lighting device 1 according to the present embodiment is provided as shown in Fig. 2 to realize lighting of a discharge lamp La of a thermionic cathode type such as a high pressure discharge lamp which is also called HID (high-intensity discharge lamp), includes a full bridge circuit having of four of switching elements Q1 to Q4 as a power conversion part for converting DC power inputted from a DC power source E into AC power. For the switching elements Q1 to Q4, a field effect transistor (FET) is used in the present embodiment. Moreover, one of output ends of the above full bridge circuit, or a connection point of the switching elements Q3 and Q4 to constitute one of two series circuit each of which including two of the switching elements Q1 and Q4 and connected in parallel from one another between output ends of the DC power source E, is connected to one end (or one of electrodes) of a discharge lamp La via a series circuit including a first inductor L1 and a primary winding of a current transformer CT1. Further connected to the other output end of the above full bridge circuit, or a connection point of the switching elements Q1 and Q2 to constitute the other series circuit, is the other end (i.e. other electrode) of the discharge lamp La via a second inductor L2. Also connected between the connection point of the switching elements Q1 and Q2 to constitute the above other series circuit and a connection point of the primary winding of current transformer CT1 and the first inductor L1 is a first capacitor C3. The second inductor L2 further serves as an autotransformer provided with a tap, and this tap is grounded via a capacitor C4. That is, the first inductor L1, the first capacitor C3, the second inductor L2 and the second capacitor C4 constitutes, along with the discharge lamp La, a resonance circuit (referred to as a "load circuit" hereinafter) connected between the output ends of the power conversion part.

The present embodiment further includes a symmetry determination part 2 connected to a secondary winding of the current transformer CT1 so as to determine whether or not a current Ila outputted to the discharge lamp La (referred to as a "lamp current" hereinafter) is positive/negative symmetrical, and a control part 3 for driving each of the switching elements Q1 to Q4 to be turned on/off.

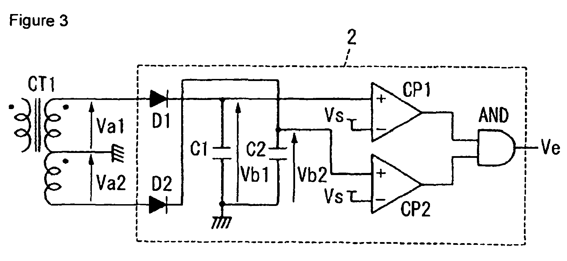

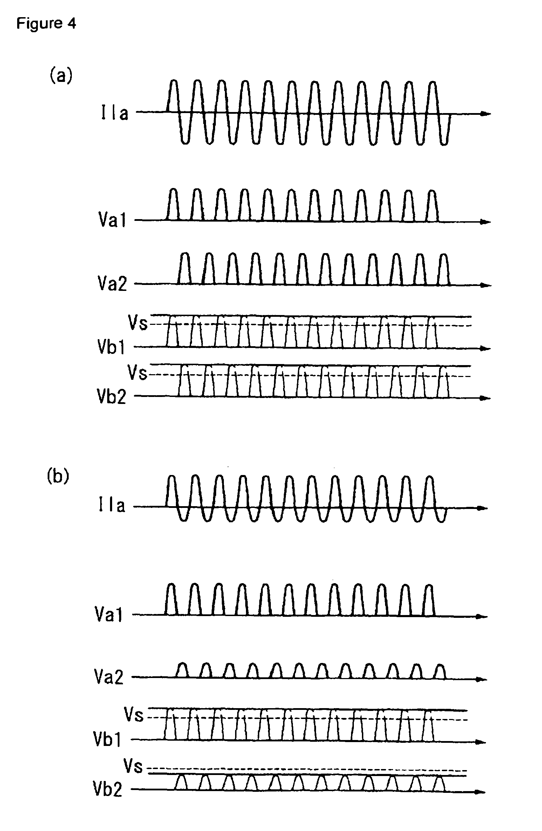

The symmetry determination part 2, as shown in Fig. 3, includes two comparators CP1 and CP2 each of which has a non-inverted input terminal connected to one end of the secondary winding of the current transformer CT1 via a diode D1 or D2 and an inverted input terminal for receiving a predetermined symmetry determination voltage Vs, and an AND circuit AND for outputting, to the control part 3, a logical product made by outputs from these two comparators CP1 and CP2. A tap is arranged at the center of a secondary winding of the current transformer CT1, and the tap is grounded. Connection points between the non-inverted input terminals of the comparators CP1 and CP2 and the diodes D1 and D2 are grounded via capacitors C1 and C2 respectively. That is, charge voltages Vb1 and Vb2 obtained in the capacitors C1 and C2 correspond to peak values of output voltages Va1 and Va2 outputted from the diodes D1 and D2 respectively, or correspond to peak values of the lamp current Ila in directions (or polarities) corresponding to the capacitors C1 and C2 respectively, and the charge voltages Vb1 and Vb2 are inputted to the non-inverted input terminals of the comparators CP1 and CP2 corresponding to the capacitors C1 and C2 respectively. As shown in Fig. 4 (a), if the lamp current Ila is symmetrical, both of the charge voltages Vb1 and Vb2 in the respective capacitors C1 and C2 exceed a symmetry determination voltage Vs, whereby an output Ve from the AND circuit AND (i.e. an output from the symmetry determination part 2, referred to as a "determination output" hereinafter) exhibits an H level. In contrast, as shown in Fig. 4 (b), the lamp current which is asymmetrical causes the charge voltage Vb2 in the capacitor C2 being one of the capacitors to fall under the symmetry determination voltage Vs, whereby the determination output Ve exhibits an L level. That is, the H level exhibited by the determination output Ve means power outputted to the discharge lamp La was determined to be symmetrical by the symmetry determination part 2, as opposed to the L level exhibited by the determination output Ve to mean power outputted to the discharge lamp La is determined to be asymmetrical by the symmetry determination part 2.

The control part 3 drives the switching elements Q1 to Q4 to be turned on/off so that the switching elements Q1 to Q4 positioned to be diagonal from each other are turned on simultaneously and the switching elements Q1 to Q4 connected in series from each other are turned on/off alternately. Therefore, DC power inputted from the DC power source E is converted into AC power, and the AC power has a frequency which corresponds to a frequency obtained in polarity inversion by the above on/off driving (referred to as a "driving frequency" hereinafter).

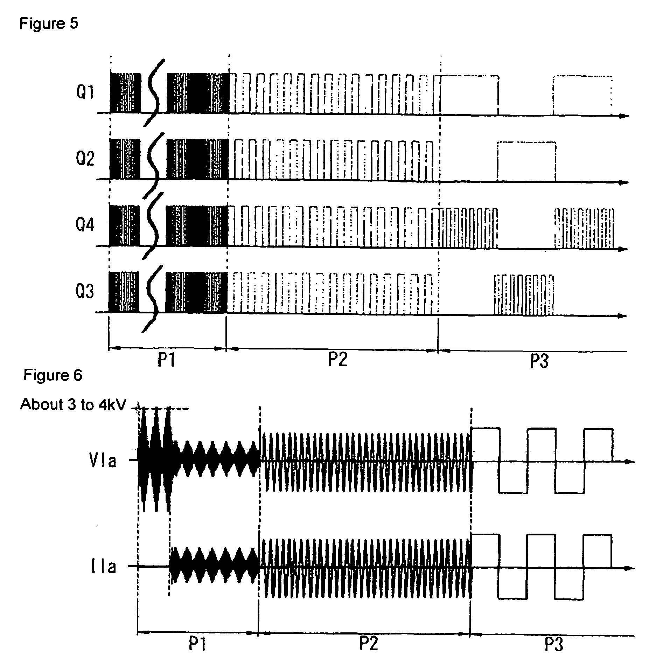

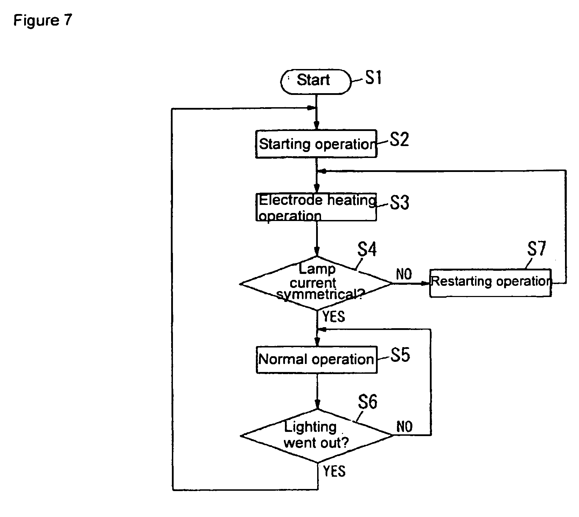

More details of an operation in the control part 3 will be explained below by using Figs. 5 to 7. Here, Fig. 5 shows a driving signal inputted to each of the switching elements Q1 to Q4, or more specifically, a voltage applied between a gate and a source thereof, wherein each of the switching elements Q1 to Q4 is turned on in a period of the H level exhibited by the above driving signal and turned off in a period of the L level exhibited by the above driving signal.

When the power source is turned on (S1), the control part 3 initially starts a starting operation to start discharge in the discharge lamp La (S2). In a starting period P1 during which the starting operation is carried out, the control part 3 sets an operating frequency to several hundreds kHz and the operating frequency is changed periodically in a range with a change width of several tens kHz. During this starting period P1, the operating frequency is brought into a resonance frequency (or an integer fraction thereof) in a resonance circuit including of a primary winding portion of the secondary inductor L2 serving as an autotransformer, or a portion between the connection point of the switching elements Q1 and Q2 and a tap, and the second capacitor C4, wherein a resonance voltage generated at this time is boosted by the second inductor L2 serving as an autotransformer and a voltage Vla outputted to the discharge lamp La (referred to as a "lamp voltage" hereinafter) therefore reaches a voltage required for starting or to start discharge (e.g. 3 to 4kV), so that the discharge lamp La is made to start. That is, the second inductor L2 and the second capacitor C4 constitute a starting part in claims. In an example of Fig. 6, the discharge lamp La is made to start with the start of the lamp current Ila to flow in a third cycle of the above periodical change made in the operating frequency, and an impedance change accompanied by the start of the discharge lamp La causes an amplitude reduction in the lamp voltage Vla.

After maintaining the above starting operation for a predetermined period of time, the control part 3 finishes the starting operation and causes transition to an electrode heating period P2 in which an electrode heating operation is carried out to make the operating frequency smaller (e.g. several tens kHz) than that during the starting operation (S3). The operating frequency during the electrode heating operation is a relatively high frequency close to a resonance frequency in the load circuit connected between the output ends of the full bridge circuit, in comparison with an operating frequency during a normal operation to be described later. Therefore, each electrode of the discharge lamp La is heated. After maintaining the electrode heating operation for the predetermined period of time, the control part 3 refers to an output from the symmetry determination part 2 (S4), and if the lamp current Ila is determined to be symmetrical by the symmetry determination part 2 (i.e. H level exhibited by the determination output Ve), the process moves onto the normal operation (S5).

During a normal period P3 in which the normal operation is carried out, the control part 3 makes the operating frequency much lower (e.g. several tens kHz) than that during the electrode heating operation so as to supply rectangular wave AC power to the discharge lamp La for lighting maintenance in the discharge lamp La. During the normal operation, the control part 3 also performs a PWM control to adjust power supplied to the discharge lamp La by turning on/off each of the switching elements Q3 and Q4 in one of the series circuits at a predetermined duty ratio without constantly turning them on even in a period during which the switching elements Q1 and Q2 positioned to be diagonal thereto are turned on. During the normal operation, the control part 3 further detects whether the discharge lamp La goes out based on, for example, the lamp current Ila (S6) and when it is detected to go out, the normal operation is finished to return to the starting operation in the step S2.

Meanwhile, if the lamp current Ila is determined to be asymmetrical by the symmetry determination part 2 in the step S4 (i.e. L level exhibited by the determination output Ve), the process moves onto a restarting operation (S7). More specifically, in starting the restarting operation, the control part 3 initially detects which polarity has a less lamp current by, for example, obtaining an output from each of the comparators CP1 and CP2 in the symmetry determination part 2. The restarting operation makes, for example, an on-duty higher than that in the starting operation in a pair of the switching elements Q1 to Q4 by which a voltage is applied to a polarity having a less amount of the lamp current Ila (or polarity having a higher lamp voltage Vla) out of the switching elements Q1 to Q4 (in other words, makes an on-duty lower than that in the starting operation in the remaining two of the switching elements Q1 to Q4). For example, if the lamp current Ila is larger in a negative polarity than a positive polarity during the first electrode heating period P2 as shown in Fig. 1, an on-duty is made higher for any of the switching elements Q1 to Q4 by which a voltage is applied in a positive direction in a subsequent restarting period P4 during which the restarting operation is carried out, whereby an amplitude of the lamp voltage Vla is made larger in a positive polarity than a negative polarity. The control part 4 maintains the restarting operation for a predetermined period of time (e.g. the same period as the starting operation), followed by restarting the electrode heating operation in the step S3. In the example of Fig. 1, the lamp current Ila is brought into a symmetrical state in finishing the second electrode heating operation P2, followed by transition to the normal period P3.

According to the above configuration, it is made easier to resolve an asymmetrical state of the lamp current Ila in a short period of time, in comparison with a case to simply return to the starting operation if the lamp current Ila is determined to be asymmetrical.

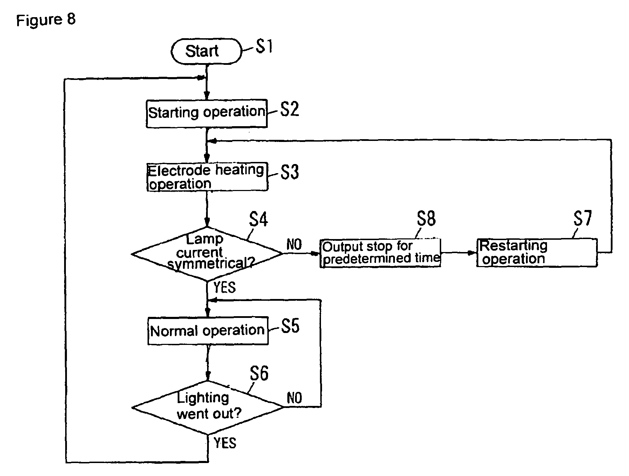

Note that, after determination of the lamp current Ila as being asymmetrical in the step S4 and before transition to the restarting operation in step S7, the control part 3 may also cause a stopping operation (S8) as shown in Fig. 8 to turn off the entire switching elements Q1 to Q4 over a predetermined stopping period of time so as to stop power outputted to the discharge lamp La. If this configuration is employed, it is made much easier to resolve an asymmetrical state of the lamp current Ila because gas is stabilized in the discharge lamp La during the stopping operation.

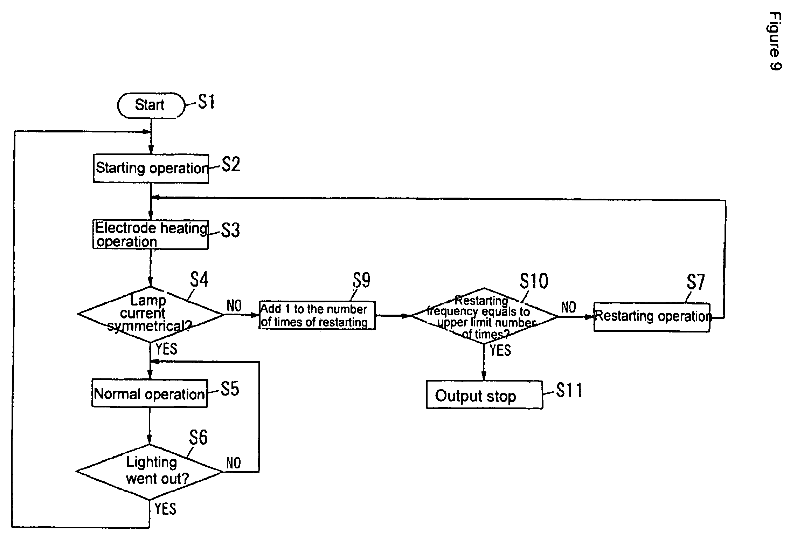

The number of times to perform the restarting operation may also be restricted. More specifically, as shown in Fig. 9, the control part 3 calculates the number of times in which the lamp current Ila has been determined to be asymmetrical in the step S4 (referred to as a "the number of times of restarting" hereinafter) (S9), and compares the number of times of restarting to a predetermined upper limit number of times (k10), followed by transition to the restarting operation in the step S7 if the number of times of restarting does not reach the upper limit number of times, whereas, if the number of times of restarting reaches the upper limit number of times, power supplied to the discharge lamp La is stopped by, for example, turning off each of the switching elements Q1 to Q4 (S11). That is, the restarting operation is not carried out more than the upper limit number of times, whereby making it possible to prevent an unnecessary electrical stress from being applied to circuit components by endlessly repeating the restarting operation and the electrode heating operation.

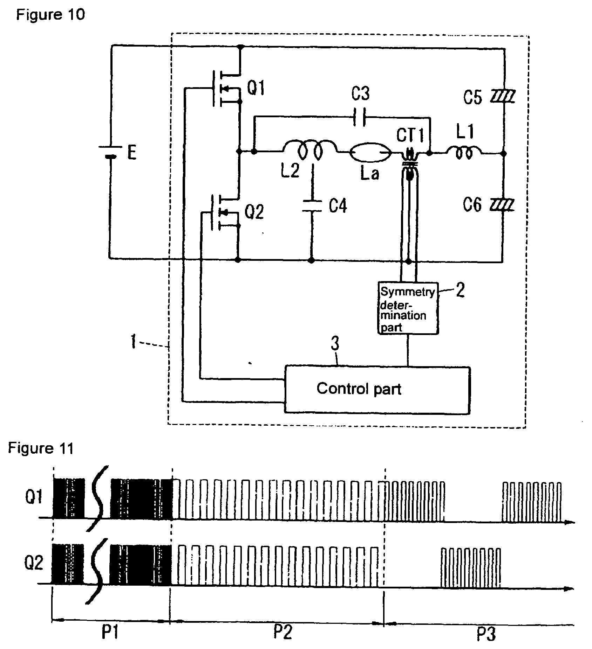

Moreover, there is no limitation on the above circuit configuration and, in place of the full bridge circuit as shown in Fig. 2, as shown in Fig.10, a half bridge circuit may also be employed by replacing the switching elements Q3 and Q4 to constitute one of the series circuits with capacitors C5 and C6 respectively. In this case, two of the switching elements Q1 and Q2 connected in series from each other as shown in Fig. 1 are driven to be turned on/off in the starting period P1 and the electrode heating operation P2 in common with the examples of Figs. 2 to 6, but a PWM control is performed in the normal period P3 to adjust power outputted to the discharge lamp La by a duty ratio obtained in turning on/off the switching elements Q1 and Q2 each of which should be turned on in a period during which polarity inversion is not carried out.

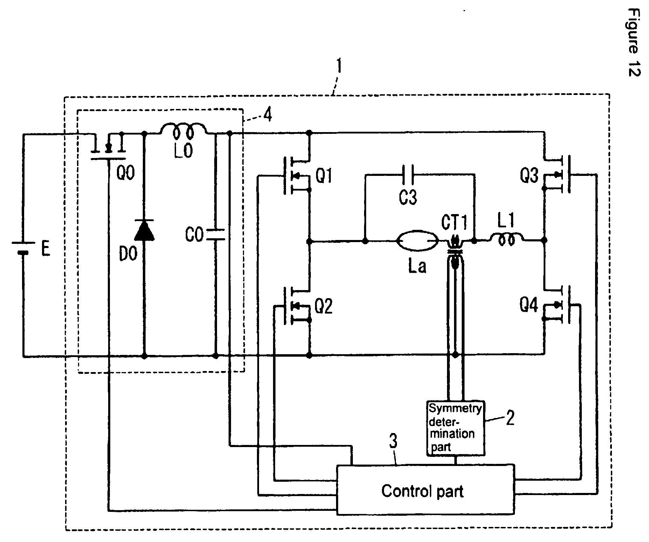

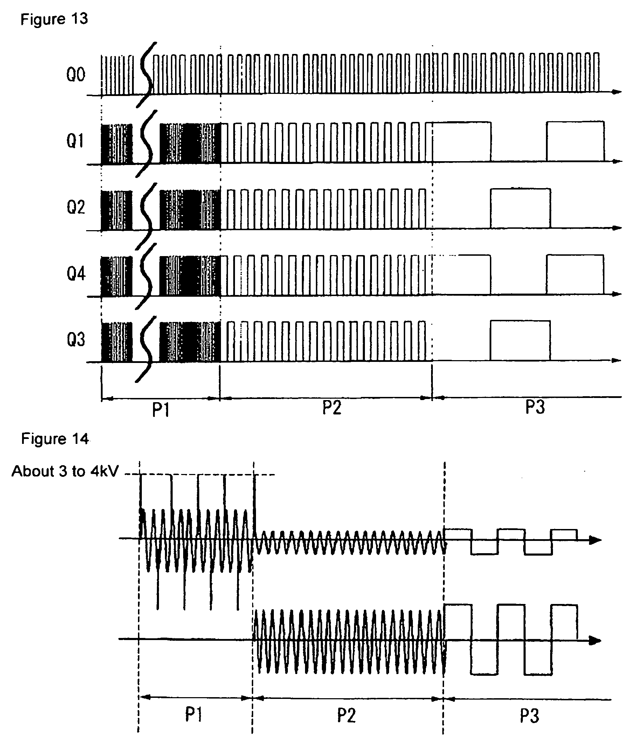

A step-down chopper circuit 4 may also be arranged as shown in Fig. 12 to step down a voltage outputted from the DC power source E to the full bridge circuit. In this case, a power conversion circuit in claims includes the full bridge circuit having the four switching elements Q1 to Q4 and the above step-down chopper circuit 4. In the example of Fig. 12, the step-down chopper circuit 4 includes a switching element Q0 with one end connected to an output end of the DC power source E on a high voltage side and the other end connected to an input end of the full bridge circuit via an inductor L0, a diode D0 with a cathode connected to a connection point of the switching element Q0 and the inductor L0 and an anode connected to the ground, and a capacitor C0 connected between input ends of the full bridge circuit or output ends of the step-down chopper circuit 4. The example of Fig. 12 also shows the load circuit in which the second inductor L2 and the second capacitor C4 are omitted, wherein the starting operation uses resonance in a resonance circuit including the first capacitor C3 and the first inductor L1 to output a high voltage for starting to the discharge lamp La. That is, the first capacitor C3 and the first inductor L1 constitute the starting part in claims. Furthermore, as shown in Fig. 13, the control part 3 controls power supplied to the discharge lamp La by a duty ratio obtained in turning on/off the switching element Q0 in the step-down chopper circuit 4, which means a PWM control made by turning on/off the switching elements Q1 to Q4 in the full bridge circuit is not carried out even in the normal period P3.

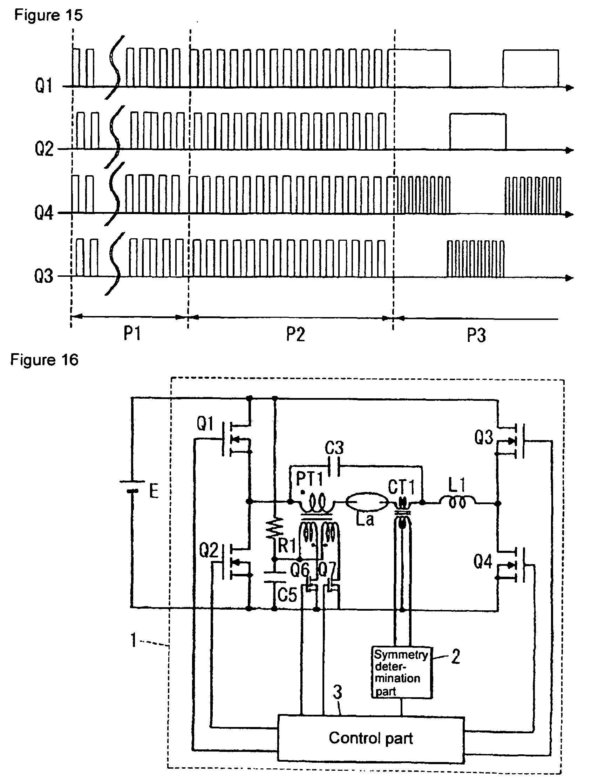

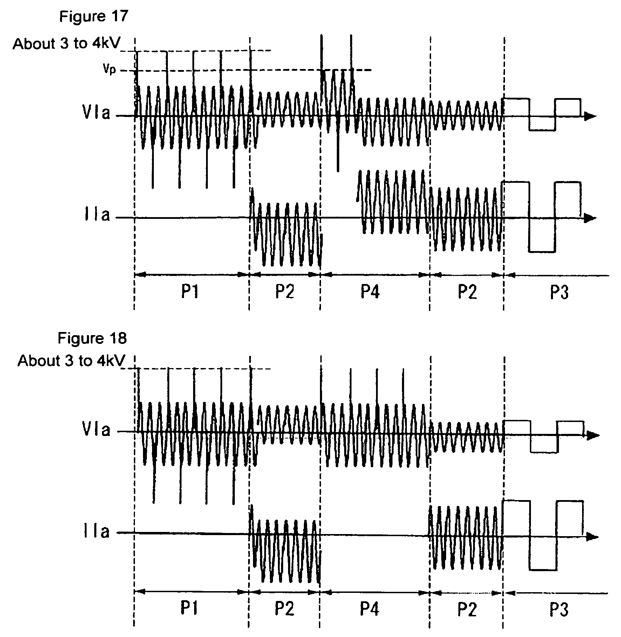

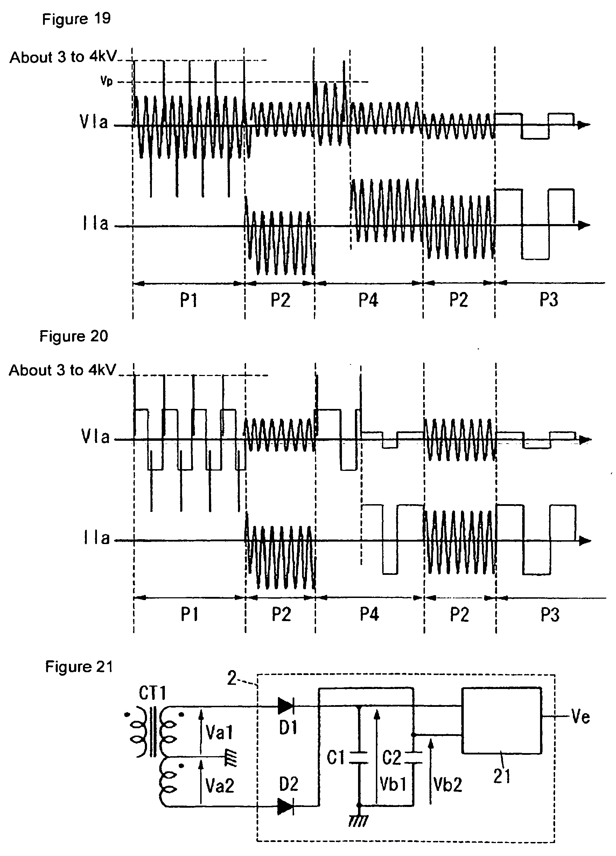

Alternatively, a pulse generation circuit may also be arranged as the starting part to generate a high voltage pulse for starting the discharge lamp La during the starting period P1 as shown in Fig. 14. In this case, an operating frequency during the starting period P1 can be the same as an operating frequency during the electrode heating period P2 as shown in Fig. 15. More specifically, in place of arranging the second inductor L2 and the second capacitor C4, for example, a pulse transformer PT1 is arranged as shown in Fig. 16 wherein a primary winding thereof is connected between the discharge lamp La and a connection point among the first capacitor C3 and the switching elements Q1 and Q2, including two of secondary windings. A series circuit including a resistor R1 and a third capacitor C5 is further connected between output ends of the DC power source E in parallel with the series circuit including the switching elements Q1 and Q2, connecting a different one end of each of the secondary windings of the pulse transformer PT1 to a connection point of the resistor R1 and the third capacitor C5, and connecting the other ends of the secondary windings to the ground via individual switching elements Q6 and Q7 respectively. More specifically, when one of the switching elements Q6 and Q7 is turned on, a pulse voltage in a polarity corresponding to either of the switching elements Q6 and Q7 to be turned on is superimposed on the lamp voltage Vla. The control part 3 controls the switching elements Q6 and Q7 in the above pulse generation circuit to be turned on/off at appropriate timing during the starting operation and the restarting operation, whereby a pulse voltage for starting is generated. That is, in the example of Fig. 16, the pulse transformer PT1, the resistor R1, the third capacitor C5 and the switching elements Q6 and Q7 constitute the pulse generation circuit or the starting part. In the case where the pulse generation circuit which is capable of controlling a polarity to generate a pulse for starting as stated above is used to generate the above pulse in each polarity evenly in the starting operation, the restarting operation may also be carried out by changing an on-duty in the switching elements Q1 to Q4 in the full bridge circuit so as to increase the amplitude in a polarity having a less amount of the lamp current Ila (or having a higher lamp voltage Vla) as shown in Fig. 17 in the same manner with the example of Fig. 1, or by increasing the number of the above pulses in one of polarities having a less amount of the lamp current Ila (or having a higher lamp voltage Vla) more than the number of the above pulses in the other polarity (e.g. rendering the number of the above pulses in one of the polarities to be equivalent to the number of pulses in the starting operation while setting 0 for the number of the pulses in the other polarity) as shown in Fig. 18, or by both operations as shown in examples of Figs. 19 and 20 including an on-duty change in the switching elements Q1 to Q4 in the full bridge circuit as explained in the example of Fig. 17 and pulse generation only in one of polarities as explained in the example of Fig. 18. In the starting period P1 and the restarting period P4 in the example of Fig. 20, a sufficiently low frequency (e.g. equivalent frequency applied to the normal period P3) is applied to turn on/off the switching elements Q1 to Q4 in the full bridge circuit, wherein the lamp voltage Vla exhibits a rectangular waveform and the amplitude itself in the lamp voltage Vla is substantially equivalent in each polarity.

Moreover, the symmetry determination part 2 is not limited to the configuration as shown in Fig. 3, and may also be realized by, for example, a configuration as shown in Fig. 21. The symmetry determination part 2 in Fig. 21 includes, in place of the comparators CP1 and CP2, a calculation part 21 for calculating an absolute value |Vb1 - Vb2| from a difference of the inputted charge voltages Vb1 and Vb2 in the capacitors C1 and C2 respectively for comparison with a predetermined determination threshold. If the above absolute value |Vb1 - Vb2| is less than a determination threshold, the calculation part 21 determines the lamp current Ila is symmetrical and brings the output (determination output) Ve to the control part 3 into the H level, while determination of the above absolute value |Vb1 - Vb2| as being equal to or more than the determination threshold is accompanied by determination of the lamp current Ila as being asymmetrical and the determination output Ve is brought into the L level.

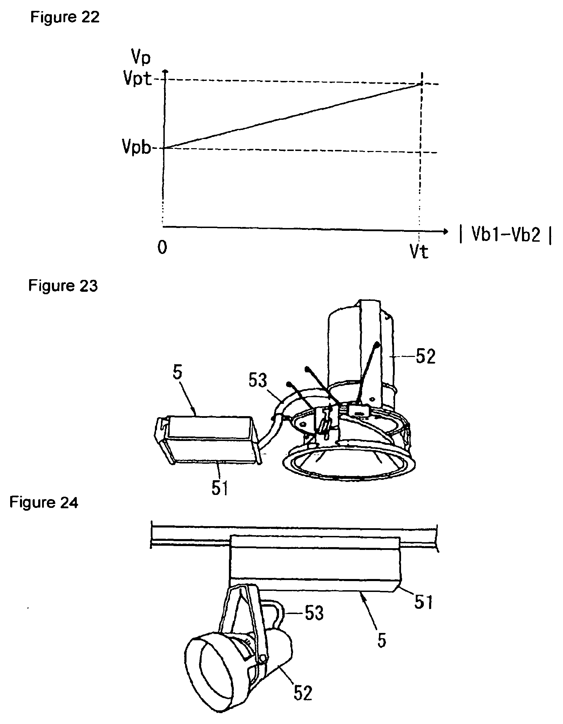

Furthermore, the control part 3 may also cause the restarting operation to correspond to a degree of an asymmetrical state in the lamp current Ila. To be more specific, in the case of using, for example, the symmetry determination part 2 as shown in Fig. 21, the absolute value |Vb1 - Vb2| calculated from the difference of the charge voltages Vb1 and Vb2 in the respective capacitors C1 and C2 (referred to as an "asymmetrical voltage" hereinafter) is obtained from the calculation part 21, followed by, for example, causing an on-duty in each of the switching elements Q1 to Q4 in the full bridge circuit to have a larger difference as the asymmetrical voltage |Vb1 - Vb2| is increased, so that a peak value Vp of the lamp voltage Vla (simply referred to as a "peak voltage" hereinafter) except for the high voltage pulse is made higher in a polarity having a less amount of the pulse current Ila as shown in Fig. 22. In the example of Fig. 22, the peak voltage Vp is set to a minimum value Vpb when the asymmetrical voltage |Vb1 - Vb2| is 0, and set to a maximum value Vpt when the asymmetrical voltage |Vb1 - Vb2| is equal to or more than a predetermined maximum voltage Vt, wherein the peak voltage Vp is monotonously increased in a linear state relative to the asymmetrical voltage |Vb1 - Vb2| which is equal to or less than the predetermined maximum voltage Vt. Here, the maximum voltage Vt refers to a value assumedly taken by the asymmetrical voltage |Vb1 - Vb2| when the amplitude of the lamp current Ila is 0 in one of polarities. A value which is low enough to prevent a voltage applied to any circuit components from exceeding a breakdown voltage is also set for the maximum value Vpt in the peak voltage Vp. Moreover, even though the restarting operation is not carried out in practice when the asymmetrical voltage |Vb1 - Vb2| is 0, the above minimum value Vpt refers to, for example, a value assumedly taken by the amplitude of the lamp voltage Vla other than pulses in the normal starting operation.

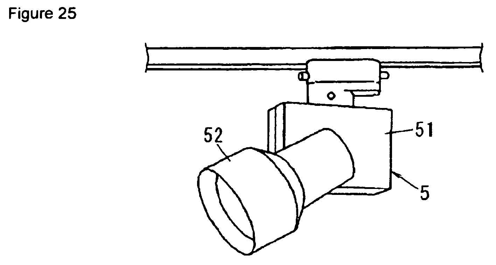

The above various kinds of the discharge lamp lighting device 1 can be used for illumination fixtures 5 as shown in Figs. 23 to 25. Each of the illumination fixtures 5 shown in Figs. 23 to 25 includes a fixture main body 51 for storing the discharge lamp lighting device 1, and a lamp body 52 for holding the discharge lamp La. In each of the illumination fixtures 5 shown in Figs. 23 and 24, a power supply line 53 is provided to electrically connect the discharge lamp lighting device 1 and the discharge lamp La. The illumination fixture 5 in Fig. 23 corresponds to a downlight in which the fixture main body 51 and the lamp body 52 are both fixed onto a ceiling surface, whereas the illumination fixtures 5 in Figs. 24 and 25 correspond to a spotlight in which the lamp body 52 is mounted swingably as opposed to the fixture main body 51 fixed onto a mounting surface such as ceiling surface. The above various kinds of the illumination fixture 5 can be realized by a known technique and detailed explanation thereof will be omitted.

### [Description of Reference Numerals]

- 1: Discharge lamp lighting device
- 2: Symmetry determination part
- 3: Control part
- 4: Step-down chopper circuit
- 5: Illumination fixture
- 51: Fixture main body
- La: Discharge lamp

## Claims

1. A discharge lamp lighting device (1) comprising:
a power conversion part for outputting AC power by receiving DC power;
a starting part connected, along with a discharge lamp (La), between output ends of the power conversion part so as to generate a high voltage for starting the discharge lamp (La); and
a control part (3) for controlling the power conversion part, wherein
after performing a starting operation (S2) to start the discharge lamp (La) by a high voltage generated in the starting part and before starting a normal operation (S5), the control part (3) performs, in starting the discharge lamp (La), an electrode heating operation (S3) to cause the power conversion part to output AC power to the discharge lamp (La) for maintaining lighting of the discharge lamp (La), wherein the electrode heating operation makes a frequency outputted from the power conversion part higher than that during the normal operation over a predetermined period of time in order to heat each electrode of the discharge lamp (La),
**characterized in that**
the discharge lamp lighting device (1) including a symmetry determination part (2) for determining whether or not an output current (Ila) outputted from the power conversion part to the discharge lamp (La) is positive/negative symmetrical (S4), and
the control part (3) causing, in finishing the electrode heating operation (S3), transition to the normal operation (S5) upon determination of the output current (Ila) as being positive/negative symmetrical by the symmetry determination part (2) or, upon determination of the output current (Ila) as being positive/negative asymmetrical by the symmetry determination part (2), the electrode heating operation (S3) to be performed again to follow a restarting operation (S7) modified compared with the starting operation (S2), in order to reduce a difference in the output current (Ila) between polarities.

2. The discharge lamp lighting device according to claim 1, wherein the power conversion part includes a step-down chopper circuit for stepping down inputted DC power and a full bridge circuit for converting DC power outputted form the step-down chopper circuit.

3. The discharge lamp lighting device according to claim 1, wherein the power conversion part includes a full bridge circuit and the control part (3) controls power outputted from the power conversion part by a duty ratio obtained in turning on/off switching elements (Q1, Q2, Q3, Q4) to constitute the full bridge circuit.

4. The discharge lamp lighting device according to claim 1, wherein the power conversion part includes a half bridge circuit and the control part (3) controls power outputted from the power conversion part by a duty ratio obtained in turning on/off switching elements (Q1 Q2) to constitute the half bridge circuit.

5. The discharge lamp lighting device according to any one of claims
1 to 4, wherein the starting operation (S2) outputs high voltage pulses of both polarities for starting to the discharge lamp (La) and the restarting operation (S7) outputs a high voltage pulse for starting to the discharge lamp (La) only in a polarity having a lower current (Ila) outputted from the power conversion part than the other polarity, wherein the high voltage pulses have a peak voltage that is higher than the peak voltage (Vₚ) of other voltage pulses during the starting or restarting operation (S2, S7) respectively.

6. The discharge lamp lighting device according to any one of claims 1 to 4, wherein the starting operation (S2) outputs high voltage pulses of both polarities for starting to the discharge lamp (La) and the restarting operation (S7) makes the number of high voltage pulses for starting larger in one of polarities having a lower current (Ila) outputted from the power conversion part than the other polarity, wherein the high voltage pulses have a peak voltage that is higher than the peak voltage (Vp) of other voltage pulses during the starting or restarting operation (S2, S7) respectively.

7. The discharge lamp lighting device according to any one of claims 1 to 6, wherein the restarting operation (S7) makes an amplitude of a voltage outputted from the power conversion part larger than that in the starting operation i(S2) n a polarity having a lower current (Ila) outputted from the power conversion part than the other polarity

8. The discharge lamp lighting device according to any one of claims 1 to 4, wherein the restarting operation (S7) makes a period of time to maintain an output longer than that in the starting operation (S2) in a polarity having a lower current (Ila) outputted from the polarity inversion part than the other polarity.

9. The discharge lamp lighting device according to any one of claims 1 to 8, wherein the control part (3) carries out a stopping operation (S8) to stop AC power outputted from the power conversion part over a predetermined stopping period of time prior to start the restarting operation (S7).

10. The discharge lamp lighting device according to any one of claims 1 to 9, wherein the control part (3) calculates the number of times to determine the output current (Ila) as being asymmetrical by the symmetry determination part (2) in finishing the electrode heating operation and stops AC power outputted from the power conversion part upon determination that the number of times reached a predetermined number of times (S10, S11).

11. An illumination fixture (5) comprising the discharge lamp lighting device (1) to any one of claims 1 to 10 and a fixture main body (51) for holding the discharge lamp lighting device (1).

## Patentansprüche

1. Beleuchtungseinrichtung (1) für eine Entladungslampe aufweisend:
einen Leistungswandlerteil zum Ausgeben einer Wechselspannungsleistung durch Erhalt einer Gleichspannungsleistung;
einen Starterteil, der gemeinsam mit der Entladungslampe (La) zwischen Ausgangsenden des Leistungswandlerteils geschaltet ist, um eine Hochspannung zum Starten der Entladungslampe (La) zu erzeugen; und
einen Steuerteil (3) zur Steuerung des Leistungswandlerteils, wobei der Starterteil (3) beim Starten der Entladungslampe (La) nach dem Ausführen eines Startbetriebs (S2) zum Starten der Entladungslampe (La) durch eine Hochspannung, die in dem Starterteil erzeugt wird, und vor dem Starten eines Normalbetriebs (S5), einen Elektrodenheizbetrieb (S3) durchführt, um den Leistungswandlerteil dazu zu veranlassen, eine Wechselspannungsleistung an die Entladungslampe (La) zur Aufrechterhaltung des Leuchtens der Entladungslampe (La) auszugeben, wobei der Elektrodenheizbetrieb eine von dem Leistungswandlerteil ausgegebene Frequenz während einer vorgegebenen Zeitdauer höher macht als die während des Normalbetriebs, um jede Elektrode der Entladungslampe (La) zu heizen, **dadurch gekennzeichnet, dass**
die Beleuchtungseinrichtung (1) für die Entladungslampe einen Symmetriebestimmungssteil (2) zur Bestimmung aufweist, ob ein Ausgangsstrom (Ila), der von dem Leistungswandlerteil zu der Entladungslampe (La) ausgegeben wird, positiv/negativ-symmetrisch ist (S4) oder nicht, und
der Steuerteil (3) beim Beenden des Elektrodenheizbetriebs (S3), nach der Erfassung des Ausgangsstromes (Ila) als positiv/negativ-symmetrisch durch den Symmetrieerfassungsteil (2), einen Übergang zum Normalbetrieb (S5) veranlasst, oder, nach der Erfassung des Ausgangsstromes (Ila) als positiv/negativ-asymmetrisch durch den Symmetrieerfassungsteil (2), die Durchführung des Elektrodenheizbetriebs (S3) folgend auf einen Neustartbetrieb (S7) erneut veranlasst, der im Vergleich zum Startbetrieb (S2) modifiziert ist, um eine Differenz im Ausgangsstrom (Ila) zwischen den Polaritäten zu reduzieren.

2. Beleuchtungseinrichtung für eine Entladungslampe nach Anspruch 1, wobei der Leistungswandlerteil ein Abwärtswandlerschaltkreis zur Abwärtswandlung der eingegebenen Gleichspannungsleistung und einen Vollbrückenschaltkreis zur Wandlung der Gleichspannungsleistung aufweist, die von dem Abwärtswandlerschaltkreis ausgegeben wird.

3. Beleuchtungseinrichtung für eine Entladungslampe nach Anspruch 1, wobei der Leistungswandlerteil einen Vollbrückenschaltkreis aufweist und das Steuerteil (3) die von dem Leistungswandlerteil ausgegebene Leistung durch eine relative Einschaltdauer steuert, die durch Einschalten/Ausschalten von Schaltelementen (Q1, Q2, Q3, Q4) erhalten wird, um den Vollbrückenschaltkreis zu bilden.

4. Beleuchtungseinrichtung für eine Entladungslampe nach Anspruch 1, wobei der Leistungswandlerteil einen Halbbrückenschaltkreis aufweist und das Steuerteil (3) die von dem Leistungswandlerteil abgegebene Leistung durch eine relative Einschaltdauer steuert, die durch Einschalten/Ausschalten von Schaltelementen (Q1, Q2) erhalten wird, um den Halbbrückenschaltkreis zu bilden.

5. Beleuchtungseinrichtung für eine Entladungslampe nach irgendeinem der Ansprüche 1 bis 4, wobei der Startbetrieb (S2) Hochspannungsimpulse mit beiden Polaritäten zum Starten der Entladungslampe (La) ausgibt und der Neustartbetrieb (S7) Hochspannungsimpulse zum Starten der Entladungslampe (La) nur in einer Polarität ausgibt, die einen von dem Leistungswandlerteil ausgegebenen geringeren Strom (Ila) aufweist als die andere Polarität, wobei die Hochspannungsimpulse eine Spitzenspannung aufweisen, die größer ist als die Spitzenspannung (Vp) von anderen Spannungsimpulsen jeweils während des Startbetriebs bzw. Neustartbetriebs (S2, S7).

6. Beleuchtungseinrichtung für eine Entladungslampe nach irgendeinem der Ansprüche 1 bis 4, wobei der Startbetrieb (S2) Hochspannungsimpulse beider Polaritäten zum Starten der Entladungslampe (La) ausgibt und der Neustartbetrieb (S7) die Anzahl der Hochspannungsimpulse zum Starten in einer der Polaritäten, die einen von dem Leistungswandlerteil ausgegebenen geringeren Strom (Ila) aufweist, gegenüber der anderen Polarität erhöht, wobei die Hochspannungsimpulse eine Spitzenspannung aufweisen, die größer ist als die Spitzenspannung (Vp) von anderen Spannungsimpulsen während des Startbetriebs bzw. Neustartbetriebs (S2, S7).

7. Beleuchtungseinrichtung für eine Entladungslampe nach irgendeinem der Ansprüche 1 bis 6, wobei der Neustartbetrieb (S7) eine Amplitude der von dem Leistungswandlerteil ausgegeben Spannung gegenüber der im Startbetrieb (S2) in einer Polarität vergrößert, die gegenüber der anderen Polarität einen von dem Leistungswandlerteil ausgegebenen geringeren Strom (Ila) aufweist.

8. Beleuchtungseinrichtung für eine Entladungslampe nach irgendeinem der Ansprüche 1 bis 4, wobei der Neustartbetrieb (S7) eine Zeitdauer während der Aufrechterhaltung einer Ausgangsgröße gegenüber dem Startbetrieb (S2) in einer Polarität verlängert, die gegenüber der anderen Polarität einen von dem Leistungswandlerteil ausgegebenen geringeren Strom (Ila) aufweist.

9. Beleuchtungseinrichtung für eine Entladungslampe nach einem der Ansprüche 1 bis 8, wobei der Steuerteil (3) einen Stoppbetrieb (S8) ausführt, um die von dem Leistungswandlerteil abgegebene Wechselspannungsleistung während einer vorgegebenen Stoppzeitdauer vor dem Start des Neustartbetriebs (S7) zu stoppen.

10. Beleuchtungseinrichtung für eine Entladungslampe nach irgendeinem der Ansprüche 1 bis 9, wobei der Steuerteil (3) die Anzahl der Ermittlungen des Ausgangsstromes (Ila) durch den Symmetrieerfassungsteil (2) beim Beenden des Elektrodenheizbetriebs als asymmetrisch berechnet und die von dem Leistungswandlerteil abgegebene Wechselspannungsleistung nach dem Ermitteln stoppt, dass die Anzahl eine vorgegebene Anzahl erreicht hat (S10, S11).

11. Beleuchtungshalterung (5) aufweisend die Beleuchtungseinrichtung (1) für die Entladungslampe nach irgendeinem der Ansprüche 1 bis 10 und einen Halterungshauptkörper (51) zum Halten der Beleuchtungseinrichtung (1) für die Entladungslampe.

## Revendications

1. Dispositif d'éclairage à lampe à décharge (1) comprenant :
une partie de conversion d'énergie, destinée à délivrer une énergie à courant alternatif en recevant une énergie à courant continu ;
une partie de démarrage connectée, en même temps qu'une lampe à décharge (La), entre des extrémités de sortie de la partie de conversion d'énergie afin de produire une haute tension pour démarrer la lampe à décharge (La) ; et
une partie de commande (3) pour commander la partie de conversion d'énergie, dans lequel
après avoir réalisé une opération de démarrage (S2) pour démarrer la lampe à décharge (La) au moyen d'une haute tension produite dans la partie de démarrage et avant de démarrer un fonctionnement normal (S5), la partie de commande (3) réalise, lors du démarrage de la lampe à décharge (La), une opération de chauffage d'électrode (S3) pour faire délivrer par la partie de conversion d'énergie une énergie à courant alternatif à la lampe à décharge (La) pour maintenir l'allumage de la lampe à décharge (La), l'opération de chauffage d'électrode rendant une fréquence délivrée par la partie de conversion d'énergie supérieure à celle qui est délivrée pendant le fonctionnement normal sur un intervalle de temps prédéterminé afin de chauffer chaque électrode de la lampe à décharge (La),
**caractérisé en ce que**
le dispositif d'éclairage à lampe à décharge (1) comprend une partie de détermination de symétrie (2) pour déterminer si un courant de sortie (Ila) délivré par la partie de conversion d'énergie à la lampe à décharge (La) est ou non symétrique positif/négatif (S4), et
la partie de commande (3) provoque, à la fin de l'opération de chauffage d'électrode (S3), une transition vers le fonctionnement normal (S5) lorsque la partie de détermination de symétrie (2) détermine que le courant de sortie (Ila) est symétrique positif/négatif, ou, lorsque la partie de détermination de symétrie (2) détermine que le courant de sortie (Ila) est asymétrique positif/négatif, une nouvelle exécution de l'opération de chauffage d'électrode (S3) pour suivre une opération de redémarrage (S7) modifiée par rapport à l'opération de démarrage (S2), afin de réduire une différence entre les polarités dans le courant de sortie (Ila).

2. Dispositif d'éclairage à lampe à décharge selon la revendication 1, dans lequel la partie de conversion d'énergie comporte un circuit hacheur abaisseur pour abaisser l'énergie à courant continu appliquée en entrée et un circuit en pont complet pour convertir l'énergie à courant continu délivrée en sortie du circuit hacheur abaisseur.

3. Dispositif d'éclairage à lampe à décharge selon la revendication 1, dans lequel la partie de conversion d'énergie comporte un circuit en pont complet et la partie de commande (3) commande la puissance délivrée par la partie de conversion d'énergie par un rapport de marche obtenu en rendant passants/bloqués des éléments de commutation (Q1, Q2, Q3, Q4) pour constituer le circuit en pont complet.

4. Dispositif d'éclairage à lampe à décharge selon la revendication 1, dans lequel la partie de conversion d'énergie comporte un circuit en demi pont et la partie de commande (3) commande la puissance délivrée par la partie de conversion d'énergie par un rapport de marche obtenu en rendant passants/bloqués des éléments de commutation (Q1, Q2) pour constituer le circuit en demi pont.

5. Dispositif d'éclairage à lampe à décharge selon l'une quelconque des revendications 1 à 4, dans lequel l'opération de démarrage (S2) délivre des impulsions à haute tension des deux polarités pour le démarrage à la lampe à décharge (La) et l'opération de redémarrage (S7) délivre une impulsion à haute tension pour le démarrage à la lampe à décharge (La) seulement dans une polarité ayant un courant inférieur (Ila) délivré par la partie de conversion d'énergie à l'autre polarité, dans lequel les impulsions à haute tension ont une tension de crête qui est supérieure à la tension de crête (Vp) des autres impulsions de tension respectivement pendant l'opération de démarrage ou de redémarrage (S2, S7).

6. Dispositif d'éclairage à lampe à décharge selon l'une quelconque des revendications 1 à 4, dans lequel l'opération de démarrage (S2) délivre des impulsions à haute tension des deux polarités pour le démarrage à la lampe à décharge (La) et l'opération de redémarrage (S7) rend le nombre d'impulsions à haute tension pour le démarrage plus grand dans une des polarités ayant un courant inférieur (Ila) délivré par la partie de conversion d'énergie à l'autre polarité, dans lequel les impulsions à haute tension ont une tension de crête qui est supérieure à la tension de crête (Vp) des autres impulsions de tension respectivement pendant l'opération de démarrage ou de redémarrage (S2, S7).

7. Dispositif d'éclairage à lampe à décharge selon l'une quelconque des revendications 1 à 6, dans lequel l'opération de redémarrage (S7) rend l'amplitude d'une tension délivrée par la partie de conversion d'énergie supérieure à celle présente lors de l'opération de démarrage (S2) dans une polarité ayant un courant inférieur (Ila) délivré par la partie de conversion d'énergie à celui délivré par l'autre polarité.

8. Dispositif d'éclairage à lampe à décharge selon l'une quelconque des revendications 1 à 4, dans lequel l'opération de redémarrage (S7) rend un intervalle de temps pour maintenir une sortie supérieur à celui de l'opération de démarrage (S2) dans une polarité ayant un courant inférieur (Ila) délivré par la partie de conversion d'énergie à celui délivré par l'autre polarité.

9. Dispositif d'éclairage à lampe à décharge selon l'une quelconque des revendications 1 à 8, dans lequel la partie de commande (3) exécute une opération d'arrêt (S8) pour arrêter l'énergie à courant alternatif délivrée par la partie de conversion d'énergie sur un intervalle de temps d'arrêt prédéterminé pour démarrer l'opération de redémarrage (S7).

10. Dispositif d'éclairage à lampe à décharge selon l'une quelconque des revendications 1 à 9, dans lequel la partie de commande (3) calcule le nombre de fois pour déterminer le courant de sortie (Ila) comme étant asymétrique par la partie de détermination de symétrie (2) lors de la fin de l'opération de chauffage d'électrode et arrête l'énergie à courant alternatif délivrée par la partie de conversion d'énergie lorsqu'il est déterminé que le nombre de fois a atteint un nombre de fois prédéterminé (S10, S11).

11. Appareil d'éclairage (5) comprenant le dispositif d'éclairage à lampe à décharge selon l'une quelconque des revendications 1 à 10 et un corps principal d'appareil (51) pour supporter le dispositif d'éclairage à lampe à décharge (1).
